(19) Europäisches Patentamt
European Patent Office
Office européen des brevets

(11) EP 4 350 572 A1

(12) EUROPEAN PATENT APPLICATION
published in accordance with Art. 153(4) EPC

(43) Date of publication:
10.04.2024 Bulletin 2024/15

(51) International Patent Classification (IPC):
*G06N 3/02* (2006.01)

(21) Application number: 22827695.2

(22) Date of filing: 24.06.2022

(86) International application number:
PCT/CN2022/101128

(87) International publication number:
WO 2022/268203 (29.12.2022 Gazette 2022/52)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 24.06.2021 CN 202110704382

(71) Applicant: Huawei Technologies Co., Ltd.
Longgang
Shenzhen, Guangdong 518129 (CN)

(72) Inventors:
• LUO, Mi
Singapore 117583 (SG)
• CHEN, Fei
Shenzhen, Guangdong 518129 (CN)
• LI, Zhenguo
Shenzhen, Guangdong 518129 (CN)
• FENG, Jiashi
Singapore 117583 (SG)

(74) Representative: Gill Jennings & Every LLP
The Broadgate Tower
20 Primrose Street
London EC2A 2ES (GB)

(54) METHOD, APPARATUS AND SYSTEM FOR GENERATING NEURAL NETWORK MODEL, DEVICES, MEDIUM AND PROGRAM PRODUCT

(57) Embodiments of the present disclosure provide a method, an apparatus, and a system for generating a neural network model, a device, a medium, and a program product. The method includes: A first device sends an indication about a structure of a subnetwork model to a second device, where the subnetwork model is determined by adjusting a structure of a hypemetwork model. The first device receives a parameter of the subnetwork model from the second device, where the parameter of the subnetwork model is determined by the second device based on the indication and the hypemetwork model. The first device trains the subnetwork model based on the received parameter of the subnetwork model. The first device sends a parameter of the trained subnetwork model to the second device for the second device to update the hypemetwork model. In the foregoing manner, an efficient federated learning scheme between a plurality of devices is provided, so that communication costs and device computing costs required in a federated learning process are further reduced while improving model precision.

300

Send an indication of a structure of a subnetwork model to a second device, where the subnetwork model is determined by adjusting a structure of a hypernetwork model — 310

Receive a parameter of the subnetwork model from the second device — 320

Train the subnetwork model based on the received parameter — 330

Send a parameter of a trained subnetwork model to the second device — 340

FIG. 3

EP 4 350 572 A1

**Description**

**TECHNICAL FIELD**

Embodiments of the present disclosure mainly relate to the field of artificial intelligence. More specifically, embodiments of the present disclosure relate to a method, an apparatus, and a system for generating a neural network model, a device, a computer-readable storage medium, and a computer program product.

**BACKGROUND**

In recent years, federated learning (Federated Learning), as an emerging distributed machine learning technology, has been applied to many scenarios such as mobile services, healthcare, and the internet of things. Federated learning can fully utilize data and computing capabilities at a client, allowing multiple parties to collaborate to build a general and more robust machine learning model without sharing data. In an environment of increasingly strict data supervision, federated learning can resolve key problems such as data ownership, data privacy, and data access permission, and has great business value.

**SUMMARY**

In view of the foregoing, embodiments of the present disclosure provide a solution for generating a neural network model applicable to federated learning.

According to a first aspect of the present disclosure, a method for generating a neural network model is provided, including: A first device sends an indication about a structure of a subnetwork model to a second device, where the subnetwork model is determined by adjusting a structure of a hypemetwork model. The first device receives a parameter of the subnetwork model from the second device, where the parameter of the subnetwork model is determined by the second device based on the indication and the subnetwork model. The first device trains the subnetwork model based on the received parameter of the subnetwork model. In the foregoing manner, an efficient federated learning scheme between a plurality of devices is provided, so that communication costs and device computing costs required in a federated learning process are further reduced while improving model precision.

In some embodiments, the method may further include: The first device obtains a preconfigured parameter of the hypemetwork model. The first device determines the structure of the subnetwork model based on the preconfigured parameter and by adjusting the structure of the hypemetwork model. In the foregoing manner, a personalized subnetwork model may be generated on a device.

In some embodiments, the obtaining a preconfigured parameter of the hypemetwork model may include: The first device generates a local parameter by training the hypemetwork model. The first device sends the local parameter to the second device. The first device receives the preconfigured parameter from the second device, where the preconfigured parameter is determined by the second device based on at least the local parameter received from the first device. In the foregoing manner, an optimized preconfigured parameter can be generated for a hypemetwork model based on data distribution of a device, to facilitate determining of a structure of a subnetwork model at low computing costs.

In some embodiments, the determining the structure of the subnetwork model may include: initializing the subnetwork model to a hypemetwork model with the preconfigured parameter; and iteratively updating the subnetwork model by performing the following operations at least once: adjusting a structure of a plurality of layers of the subnetwork model to obtain a plurality of candidate network models; selecting one candidate network model based on accuracy of the plurality of candidate network models to update the subnetwork model; and if the subnetwork model meets a constraint of the first device, determining the structure of the subnetwork model. In the foregoing manner, a device may simplify a hypemetwork model by using accuracy as a measurement indicator, to obtain a personalized neural network model that meets a resource limitation and data distribution of the device.

In some embodiments, the adjusting a structure of a plurality of layers may include: deleting parameters related to some nodes of one layer in the plurality of layers to obtain one of the plurality of candidate network models. In some embodiments, the method further includes: determining the some nodes based on a predetermined quantity percentage. In the foregoing manner, a node and a parameter that have small impact on model accuracy can be removed, so that a model structure is simplified and model accuracy is ensured.

In some embodiments, the constraint includes: a calculation amount of the subnetwork model is less than a first threshold, or a quantity of parameters of the subnetwork model is less than a second threshold. In the foregoing manner, a calculation amount and a quantity of parameters of a subnetwork model of a device may be reduced to meet a corresponding resource constraint.

In some embodiments, the first threshold and the second threshold are both associated with performance of the first device. In the foregoing manner, a corresponding resource constraint is set based on device performance.

In some embodiments, the indication is in a form of a mask, and the mask indicates whether the subnetwork model has a corresponding parameter of the hypemetwork model. In the foregoing manner, in a federated learning process, only a parameter specific to a subnetwork model needs to be transmitted, to reduce communication costs of transmission between devices.

In some embodiments, the method according to the first aspect may further include: The first device determines a change in the parameter by calculating a difference between the parameter of the trained subnetwork model and the parameter received from the second device. In the foregoing manner, in a federated learning process, only a parameter that changes after training needs to be transmitted, to reduce communication costs of transmission between devices.

According to a second aspect of the present disclosure, a method for generating a neural network model is provided. The method includes: A second device receives an indication about a structure of a subnetwork model from a plurality of first devices, where the subnetwork model is determined by adjusting a structure of a hypemetwork model. The second device determines a parameter of the subnetwork model based on the indication and the hypemetwork model. The second device sends the parameter of the subnetwork model to the plurality of first devices for the plurality of first devices to separately train the subnetwork model. In the foregoing manner, an efficient federated learning scheme between a plurality of devices is provided, so that communication costs and device computing costs required in a federated learning process are further reduced while improving model precision.

In some embodiments, the indication is in a form of a mask, and the mask indicates whether the subnetwork model has a corresponding parameter of the hypemetwork model. In the foregoing manner, in a federated learning process, only a parameter specific to a personalized model needs to be transmitted, to reduce communication costs of transmission between devices.

In some embodiments, the method according to the second aspect may further include: The second device receives, from the plurality of first devices, a change in the parameter of the trained subnetwork model. In the foregoing manner, in a federated learning process, only a parameter that changes after training needs to be transmitted, to reduce communication costs of transmission between a server device and a client device.

In some embodiments, the method according to the second aspect may further include: The second device updates the hypemetwork model by using the received change in the parameter. In the foregoing manner, in a federated learning process, the hypemetwork model at the second device may be iteratively updated, to generate a hypemetwork model that better meets data distribution of the first device of a device.

In some embodiments, the updating the hypemetwork model may include: updating the hypemetwork model based on an update weight of the parameter of the subnetwork model, where the update weight depends on a quantity of subnetwork models having the parameter. In the foregoing manner, in a federated learning process, a parameter of a server device may be weighted and updated, to generate a hypemetwork model that better meets data distribution of a client.

In some embodiments, the method according to the second aspect may further include: The second device determines a preconfigured parameter of the hypemetwork model for the plurality of first devices to determine respective subnetwork models from the hypemetwork model. In the foregoing manner, a plurality of first devices may use local data to determine a structure of a subnetwork model starting from hypemetwork models with a same preconfigured parameter.

In some embodiments, the determining a preconfigured parameter of the hypemetwork model may include: determining the preconfigured parameter of the hypernetwork model based on a local parameter determined by locally training the hypemetwork model by the plurality of first devices. In the foregoing manner, an optimized preconfigured parameter can be generated for a hypemetwork model based on data distribution of a plurality of first devices, so that the first devices can generate a personalized neural network model at low computing costs.

According to a third aspect of the present disclosure, an apparatus for generating a neural network model is provided, including: a sending unit, configured to send an indication about a structure of a subnetwork model to a second device, where the subnetwork model is determined by adjusting a structure of a hypemetwork model; a receiving unit, configured to receive a parameter of the subnetwork model from the second device, where the parameter of the subnetwork model is determined by the second device based on the indication and the hypemetwork model; and a training unit, configured to train the subnetwork model based on the received parameter of the subnetwork model. The sending unit is further configured to send a parameter of the trained subnetwork model to the second device for the second device to update the hypemetwork model. In the foregoing manner, an efficient federated learning scheme between a plurality of devices is provided, so that communication costs and device computing costs required in a federated learning process are further reduced while improving model precision.

In some embodiments, the receiving unit may be further configured to obtain a preconfigured parameter of the hypemetwork model. In some embodiments, the apparatus according to the third aspect further includes a model determining unit. The model determining unit is configured to determine the structure of the subnetwork model based on the preconfigured parameter and by adjusting the structure of the hypemetwork model. In the foregoing manner, a personalized subnetwork model may be generated on a device.

In some embodiments, in the apparatus according to the third aspect, the training unit is configured to locally train the hypemetwork model to determine a local parameter of the hypemetwork model. The sending unit is further configured to send the local parameter to the second device. The receiving unit is further configured to receive the preconfigured parameter from the second device, where the preconfigured parameter is determined by the second device based on at least the local parameter received from a first device. In the foregoing manner, an optimized preconfigured parameter can be generated for a hypemetwork model based on data distribution of a device, to facilitate determining of a structure of a subnetwork model by the device at low computing costs.

In some embodiments, the model determining unit is further configured to initialize the subnetwork model to a hypemetwork model with the preconfigured parameter. The model determining unit is further configured to iteratively update the subnetwork model by performing the following operations at least once: adjusting a structure of a plurality of layers of the subnetwork model to obtain a plurality of candidate network models; selecting one candidate network model based on accuracy of the plurality of candidate network models to update the subnetwork model; and if the subnetwork model meets a constraint of the first device, stopping the iterative update. In the foregoing manner, a device may simplify a hypemetwork model by using accuracy as a measurement indicator, to obtain a personalized neural network model that meets a resource limitation and data distribution of the device.

In some embodiments, the model determining unit is further configured to delete parameters related to some nodes of one layer in the plurality of layers to obtain one of the plurality of candidate network models. In some embodiments, the model determining unit is configured to determine the some nodes based on a predetermined quantity percentage. In the foregoing manner, a node and a parameter that have small impact on model accuracy can be removed, so that a model structure is simplified and model accuracy is ensured.

In some embodiments, a calculation amount of the subnetwork model is less than a first threshold, or a quantity of parameters of the subnetwork model is less than a second threshold. In the foregoing manner, a calculation amount and a quantity of parameters of a subnetwork model of a device may be reduced to meet a corresponding resource constraint.

In some embodiments, the first threshold and the second threshold are both associated with performance of the first device. In the foregoing manner, a corresponding resource constraint is set based on device performance.

In some embodiments, the indication is in a form of a mask, and the mask indicates whether the subnetwork model has a corresponding parameter of the hypemetwork model. In the foregoing manner, in a federated learning process, only a parameter specific to a subnetwork model needs to be transmitted, to reduce communication costs of transmission between a server device and a client device.

In some embodiments, the sending unit may be further configured to send the change in the parameter of the trained subnetwork model to the second device for the second device to update the hypernetwork model, where it may be determined that the change in the parameter is a difference between the parameter of the trained subnetwork model and the parameter received from the second device. In the foregoing manner, in a federated learning process, only a parameter that changes after training needs to be transmitted, to reduce communication costs of transmission between devices.

According to a fourth aspect of the present disclosure, an apparatus for generating a neural network model is provided, including: a receiving unit, configured to receive an indication about a structure of a subnetwork model from a plurality of first devices, where the subnetwork model is determined by adjusting a structure of a hypemetwork model; a unit for determining a parameter of a subnetwork model, configured to determine a parameter of the subnetwork model based on the indication and the hypemetwork model; a sending unit, configured to send the parameter of the subnetwork model to the plurality of first devices for the plurality of first devices to separately train the subnetwork model; and a hypemetwork update unit, where the receiving unit is further configured to receive a parameter of the trained subnetwork model from the plurality of first devices; and the hypemetwork update unit is configured to update the hypemetwork model by using the received parameter. In the foregoing manner, an efficient federated learning scheme between a plurality of devices is provided, so that communication costs and device computing costs required in a federated learning process are further reduced while improving model precision.

In some embodiments, the indication is in a form of a mask, and the mask indicates whether the subnetwork model has a corresponding parameter of the hypemetwork model. In the foregoing manner, in a federated learning process, only a parameter specific to a personalized model needs to be transmitted, to reduce communication costs of transmission between devices.

In some embodiments, the receiving unit may be further configured to receive, from the plurality of first devices, a change in the parameter of the trained subnetwork model. In the foregoing manner, in a federated learning process, only a parameter that changes after training needs to be transmitted, to reduce communication costs of transmission between a server device and a client device.

In some embodiments, the hypernetwork update unit may be further configured to update the hypemetwork model by using the received change in the parameter. In the foregoing manner, in a federated learning process, the hypemetwork model at the second device may be iteratively updated, to generate a hypemetwork model that better meets data distribution of the first device of a device.

In some embodiments, the hypemetwork update unit may be further configured to update the hypemetwork model based on an update weight of the parameter of the subnetwork model, where the update weight depends on a quantity of subnetwork models having the parameter. In the foregoing manner, in a federated learning process, a parameter of a server device may be weighted and updated, to generate a hypemetwork model that better meets data distribution of a client.

In some embodiments, the hypemetwork update unit may be further configured to determine a preconfigured parameter of the hypemetwork model for the plurality of first devices to determine respective subnetwork models from the hypemetwork model. In the foregoing manner, a plurality of first devices may use local data to determine a structure of a subnetwork model starting from hypemetwork models with a same preconfigured parameter.

In some embodiments, the hypemetwork update unit may be further configured to determine the preconfigured parameter based on a local parameter determined by locally training the hypemetwork model by the plurality of first devices. In the foregoing manner, an optimized preconfigured parameter can be generated for a hypemetwork model based on data distribution of a plurality of first devices, so that the first devices can generate a personalized neural network model at low computing costs.

According to a fifth aspect of the present disclosure, a system for generating a neural network model is provided, including: a first device, configured to perform the method according to the first aspect of the present disclosure; and a second device, configured to perform the method according to the second aspect of the present disclosure.

According to a sixth aspect of the present disclosure, an electronic device is provided, including: at least one computing unit and at least one memory. The at least one memory is coupled to the at least one computing unit and stores instructions executed by the at least one computing unit. When the instructions are executed by the at least one computing unit, the device is enabled to implement the method according to any one of the implementations of the first aspect or the second aspect.

According to a seventh aspect of the present disclosure, a computer-readable storage medium is provided, storing a computer program. When the computer program is executed by a processor, the method according to any one of the implementations of the first aspect or the second aspect is implemented.

According to an eighth aspect of the present disclosure, a computer program product is provided, including computer-executable instructions. When the instructions are executed by a processor, some or all steps of the method according to any one of the implementations of the first aspect or the second aspect are implemented.

It may be understood that the system in the fifth method, the electronic device in the sixth aspect, the computer storage medium in the seventh aspect, or the computer program product in the eighth aspect are all configured to perform the method provided in the first aspect and/or the second aspect. Therefore, explanations for or descriptions of the first aspect and/or the second aspect are also applicable to the fifth aspect, the sixth aspect, the seventh aspect, and the eighth aspect. In addition, for beneficial effects that can be achieved in the fifth aspect, the sixth aspect, the seventh aspect, and the eighth aspect, refer to beneficial effects in corresponding methods. Details are not described herein again.

## BRIEF DESCRIPTION OF DRAWINGS

The foregoing and other features, advantages, and aspects of embodiments of the present disclosure become clearer with reference to the accompanying drawings and with reference to the following detailed descriptions. In the accompanying drawings, same or similar reference numerals represent same or similar elements.

FIG. 1 is an architectural diagram of a federated learning system according to an embodiment of the present disclosure;
FIG. 2 is a schematic diagram of communication for federated training according to an embodiment of the present disclosure;
FIG. 3 is a flowchart of a process for generating a neural network model according to some embodiments of the present disclosure;
FIG. 4 is a flowchart of another method for generating a neural network model according to some embodiments of the present disclosure;
FIG. 5 is a schematic diagram of communication for determining a structure of a subnetwork model according to an embodiment of the present disclosure;
FIG. 6 is a flowchart of a process for initializing a hypernetwork according to some embodiments of the present disclosure;
FIG. 7 is a flowchart of a process for determining a structure of a subnetwork model according to an embodiment of the present disclosure;
FIG. 8 is a schematic diagram of pruning a hypemetwork according to an embodiment of the present disclosure;
FIG. 9A to FIG. 9D respectively show test results according to some embodiments of the present disclosure;
FIG. 10 is a schematic block diagram of an apparatus for generating a neural network model according to some embodiments of the present disclosure;

FIG. 11 is a schematic block diagram of another apparatus for generating a neural network model according to some embodiments of the present disclosure; and

FIG. 12 is a block diagram of a computing device capable of implementing a plurality of embodiments of the present disclosure.

## DESCRIPTION OF EMBODIMENTS

The following describes embodiments of the present disclosure in detail with reference to the accompanying drawings. Although some embodiments of the present disclosure are shown in the accompanying drawings, it should be understood that the present disclosure may be implemented in various forms, and should not be construed as being limited to the embodiments described herein. On the contrary, these embodiments are provided so that the present disclosure will be thoroughly and completely understood. It should be understood that the accompanying drawings and embodiments of the present disclosure are merely used as examples, but are not intended to limit the protection scope of the present disclosure.

In descriptions of embodiments of the present disclosure, the term "include" and similar terms thereof should be understood as open inclusion, that is, "include but are not limited to". The term "based" should be understood as "at least partially based". The terms "one embodiment" or "the embodiment" should be understood as "at least one embodiment". The terms "first", "second", and the like may indicate different or same objects. Other explicit and implicit definitions may also be included below.

As used in this specification, a "neural network" is capable of processing inputs and providing corresponding outputs, which usually includes an input layer and an output layer, and one or more hidden layers between the input layer and the output layer. A neural network used in a deep learning application usually includes many hidden layers, to increase the depth of the network. The layers of the neural network are connected in sequence, so that an output of a former layer is provided as an input of a latter layer. The input layer receives an input of the neural network, and an output of the output layer is used as a final output of the neural network. In this specification, the terms "neural network", "network", "neural network model", and "model" may be used interchangeably.

As used in this specification, "federated learning" is a machine learning algorithm, and usually includes one server device and a plurality of client devices. A machine learning model is trained by using data of a plurality of clients and by transmitting non-sensitive information such as a parameter, to achieve privacy protection.

As used in this specification, a "hypemetwork" (also referred to as a hypemetwork model or a parent network) refers to a neural network structure shared by a server and a plurality of clients in a federated learning environment. A "subnetwork" (also referred to as a subnetwork model or a personalized network) is a neural network model that is independently maintained, modified, trained, and inferred by each client in the federated learning environment. In this specification, the subnetwork model and the subnetwork may be used interchangeably, and the hypemetwork model and the hypemetwork may be used interchangeably.

The subnetwork model may be obtained by pruning the hypemetwork. The pruning refers to deleting some parameters and corresponding calculation operations in a network model and keeping a calculation process of the remaining part unchanged.

Federated learning is a distributed machine learning technology. The server device and the plurality of client devices separately perform model training locally without collecting data. In recent years, with the increasing demand for user privacy protection, federated learning has attracted more and more attention.

However, conventional federated learning requires experts to design a globally shared model architecture, which may not achieve optimal performance. Recently, neural network architecture search (Neural Architecture Search, NAS) methods are used to automatically search for a better model architecture. However, these methods only search for a globally shared model without considering client-side personalization. In a practical scenario, data distribution (for example, pictures taken by different users) at each client device may be different or may have different resource constraints (for example, different client devices have different computing capabilities). Therefore, if a same model is deployed on all clients, performance of the model deteriorates, affecting user experience. In addition, data is not evenly distributed on different clients. As a result, a global model cannot achieve optimal performance on a plurality of clients at the same time.

For the foregoing problem and other possible problems, embodiments of the present disclosure provide a federated learning-based personalized network architecture search framework and a training method. First, personalized model architectures are searched in a federated learning system through server-client interaction to provide personalized model architectures for clients with differentiated computer capabilities to meet resource constraints (for example, model sizes, floating-point operations FLOPS, and inference speeds). Then, effective federated training is performed for different client network architectures. Compared with local training only, in embodiments of the present disclosure, communication costs and device computing costs required in a federated learning process are further reduced while improving model precision.

The following describes various example embodiments of the present disclosure with reference to the accompanying drawings.

Example Environment

Embodiments of the present disclosure provide a personalized network structure search framework (Architecture of Personalization Federated Learning, APFL) for a resource constrained device. The framework can customize model architectures for different devices based on specific resource requirements and local data distribution. In addition, the framework provides a communication-friendly subnetwork federated training strategy to efficiently complete local machine learning tasks on devices.

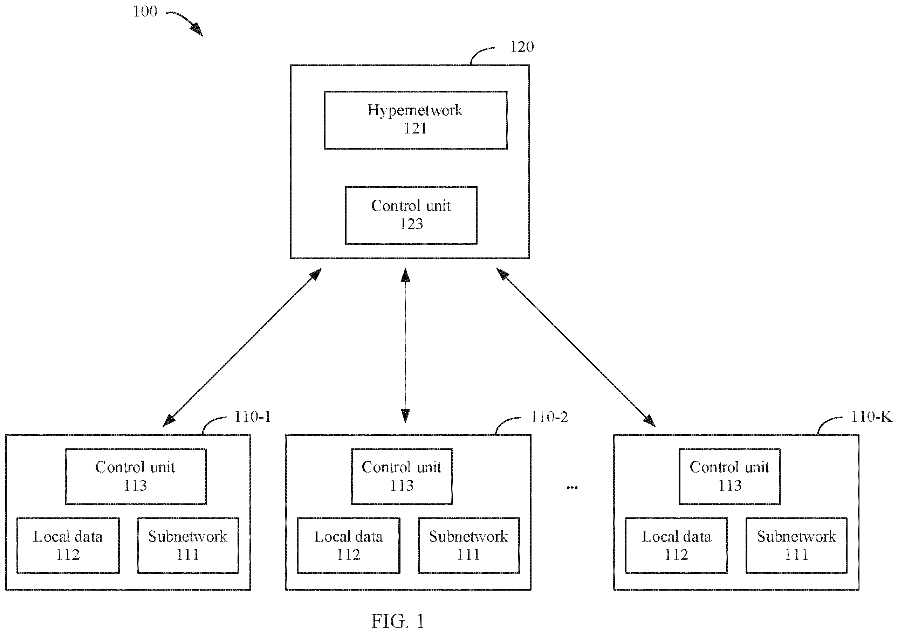

FIG. 1 is an architectural diagram of a federated learning system 100 for implementing the foregoing framework according to some embodiments of the present disclosure. The system 200 includes a plurality of first devices 110-1, 110-2, ..., 110-K (collectively referred to as a first device 110) and a second device 120. In this specification, the first device may be referred to as a client device or a client for short, and may be a terminal device having limited computing resources (for example, a processor computing capability, memory, and storage space), for example, a smartphone, a desktop computer, a notebook computer, or a tablet computer. The second device 120 may be referred to as a distributed or centralized server device or server cluster implemented in a cloud computing environment, and generally has higher computing resources or performance than those or that of a terminal device.

The plurality of first devices 110 and the second device 120 may communicate with each other and transmit data to each other in various wired or wireless manners. According to embodiments of the present disclosure, the first device 110 and the second device 120 may construct and train neural network models, for example, federated learning, for various applications such as image recognition, speech processing, and natural speech processing in a collaborative manner.

As shown in the figure, the first device 110 includes a subnetwork 111, local data 112, and a control unit 113. The control unit 113 may be a virtual or physical processing unit, and can, for example, use the local data 112 to train the subnetwork 111, use the local data 112 to adjust a structure of the subnetwork 111, and may further enable the first devices 110 to communicate with the second device 120, for example, receive a parameter of the subnetwork from the second device or transmit a parameter of the subnetwork or other information to a server. The second device 120 may include a hypemetwork 121 and a control unit 123. Similarly, the control unit 123 may alternatively be a virtual or physical processing unit, and can maintain the hypemetwork 121, for example, update a parameter of the hypemetwork 121 through training or based on a parameter of the subnetwork 111, and may further enable the second device 120 to communicate with some or all devices in the first devices 110, for example, send the parameter of the hypemetwork 123 to the first devices 110, send parameters of the subnetwork 111 for different first devices 110, and receive the parameter of the subnetwork 111 from the first devices 110. In this specification, the subnetwork model and the subnetwork may be used interchangeably, and the hypemetwork model and the hypemetwork may be used interchangeably.

The hypemetwork 123 may be shared between the first device 110 and the second device 120, so that the first device 110 may prune a hypemetwork to determine the subnetwork 111 of the first device 110. The determined subnetwork 111 may meet resource constraints and data distributions of different first devices 110.

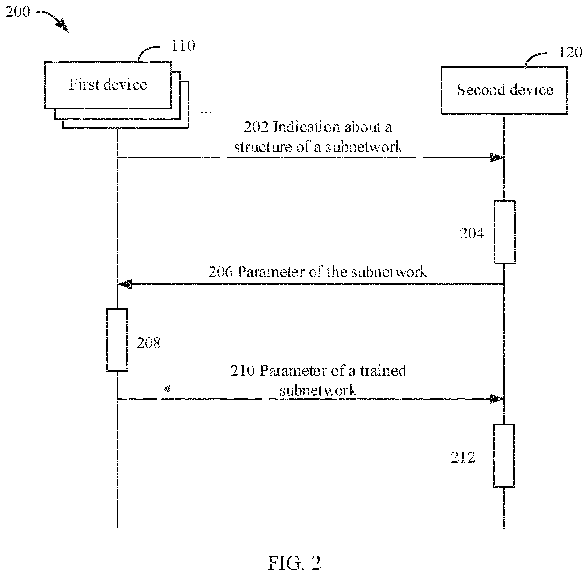

According to embodiments of the present disclosure, a federated training method for a hypemetwork 121 and a subnetwork 111 implemented by a plurality of first devices 110 and a second device is provided. The following provides detailed description with reference to FIG. 2 to FIG. 8.

Federated training

According to embodiments of the present disclosure, a plurality of first devices 110 and a second device 120 transmit parameters and other information of respective neural network models to each other, to implement federated training.

FIG. 2 is a schematic diagram of communication 200 for federated training according to an embodiment of the present disclosure. As shown in the figure, the plurality of first devices 110 send (202) indications about structures of subnetwork models 111 of the first devices to the second device 120. According to embodiments of the present disclosure, a structure of the subnetwork model 111 is determined based on a hypemetwork 123, and an indication of the structure may be in a form of a mask, for example, a 0-1 vector having the same dimension as that of a hypernetwork model. If a value of a component is 1, it indicates that a corresponding parameter of the subnetwork model is reserved. If a value of a component is 0, it indicates that a corresponding parameter is deleted from the hypemetwork 123.

The second device 120 calculates (204) a parameter of the subnetwork model 111 of each first device 110 based on the received indication. For example, the second device 120 may perform component multiplication on the parameter of the hypemetwork model 121 and the received mask, and extract a non-zero component to obtain the parameter of the subnetwork model 111. Then, the second device transmits (206) the obtained parameter of the subnetwork model 111 to the corresponding first device.

Next, each first device 110 trains (208), based on the received parameter, various subnetwork models 111 by using local data 112, and transmits (210) the parameter of the trained subnetwork model 111 to the second device 120. The transmitted parameter may be a value of the parameter or may be a change in the parameter, to be specific, an update amount.

The second device 120 updates the hypemetwork model 121 by using the received parameter of the subnetwork model 111 trained by the first device 110. For example, the parameter of the hypemetwork model 121 is updated by calculating an average value, a weighted average, or another manner of the parameters. Such federated learning according to embodiments of the present disclosure may be iterative, in other words, actions of 204, 206, 208, 210, 212 are repeated after the second device 120 updates the hypemetwork model 121. In addition, the first device 110 that participates in the foregoing process each time may be variable, for example, may be any subset of a currently online first device 110.

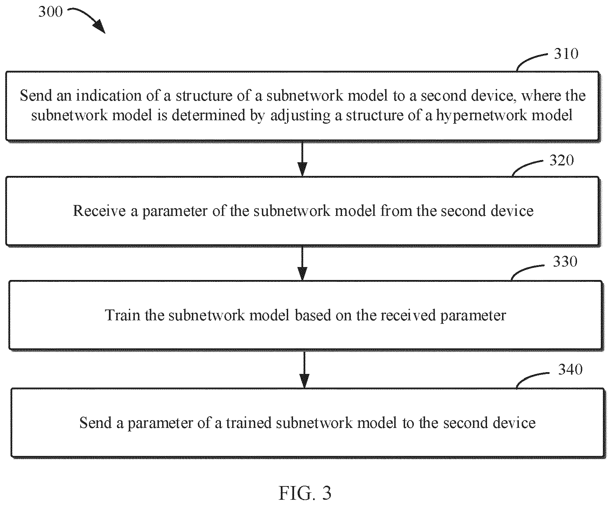

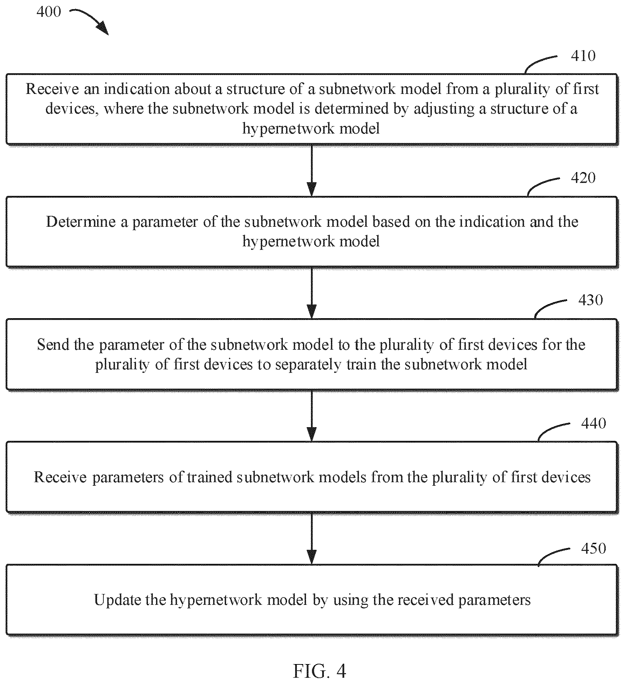

Processes in which the first device 110 and the second device 120 perform federated learning to generate neural network models are separately described below with reference to FIG. 3 and FIG. 4. The second device 120 maintains a hypemetwork $\hat{w}$, a personalized network $\hat{w}_k$ of each first device 110 is a subnetwork of $\hat{w}$, and architectures of the subnetworks $\hat{w}_1, \dots, \hat{w}_K$ may be different.

FIG. 3 is a flowchart of a process 300 for generating a neural network model according to some embodiments of the present disclosure. The process 300 may be implemented in each device $u_k$ ( $\underline{k}$ = 1, ... , $K$ ) in $K$ first devices 110, and more specifically, performed by the control unit 113.

Box 310: Send an indication of a structure of a subnetwork model to a second device, where the subnetwork model is determined by adjusting a structure of a hypemetwork model. In some embodiments, the indication may be in a form of a mask (mask), indicating whether the subnetwork model 111 has a corresponding parameter of the hypemetwork model 121. For example, the first device $u_k$; sends the mask $z_k$, to the second device 120. $z_k$ is a 0-1 vector that has the same dimension as that of the hypemetwork 121 $\hat{w}$, and indicates a subnetwork structure $\hat{w}_k$. To be specific, if a value of a component in $z_k$ is 1, it indicates that a corresponding parameter in the hypemetwork 121 is reserved in $\hat{w}_k$. If a value of a component is 0, it indicates that a corresponding parameter is deleted. In this way, the second device 120 may learn the structure of the subnetwork model 111 of the first device 110, to determine a parameter of the subnetwork model 111 for each first device. For example, at the beginning of federated training of a subnetwork, the hypemetwork 121 of the second device 120 has a preconfigured parameter, to be specific, it is set that $\hat{w}^{(0)} = \hat{w}$.

According to embodiments of the present disclosure, the federated training of a subnetwork may be iteratively performed, for example, is performed $T'$ rounds. In an iteration $t$ = 0, ... , $T'$ - 1, $K'$ ($K' \leq K$) first devices may be selected from the $K$ first devices 110 to participate in the round of iteration. For the selected first device, actions in Blocks 720 to 740 are performed.

Block 320: Receive a parameter of the subnetwork model from the second device. According to embodiments of the present disclosure, the parameter of the subnetwork model 111 is computed by the second device 120 by using a current parameter of the hypemetwork model 121 and a mask of the subnetwork model. For example, $\hat{w}^{(t)} \circ z_{L_k}$ is calculated. Next, the second device 120 may extract a non-zero component

$$\hat{w}^{(t)}_{L_k}$$

and transmit the non-zero component to the first device $u_k$. $\circ$ indicates multiplication of vector components. In this way, the first device 110 receives the parameter of the subnetwork model 111.

Next: Block 330: Train the subnetwork model based on the received parameter. In some embodiments, the first device $u_k$ receives and assigns a value

$$\hat{w}^{(t)}_{L_k}$$

to the parameter of the subnetwork model 111, and updates the subnetwork parameter by using local training data 112 to obtain an updated parameter

$$\tilde{w}^{(t)}_{L_k}.$$

For example, *S'*-step gradient descent may be performed with local training data, as shown in the following Equation (1):

$$
\begin{aligned}
\hat{w}_{t_k,0}^{(t)} &= \hat{w}_{t_k}^{(t)} \\
\hat{w}_{t_k,s+1}^{(t)} &= \hat{w}_{t_k,s}^{(t)} - \lambda' \nabla L\left(\hat{w}_{t_k,s}^{(t)}; D_{t_k,s}\right), s = 0,1,\ldots,S'-1 \\
\hat{w}_{t_k}^{(t)} &= \hat{w}_{t_k,S'}^{(t)}
\end{aligned}
\qquad (1)
$$

$\lambda$ is a learning rate. *L* is a cross-entropy loss function. $D_{k,s}$ is a random sample of a training set $D_{L_K}$.

Block 340: Send a parameter of the trained subnetwork model to the second device. In some embodiments, the parameter that is of the subnetwork model 111 and that is sent by the first device 110 to the second device 120 may include a change

$$
v_{t_k}^{(t)} = \hat{w}_{t_k}^{(t)} - \hat{w}_{t_k}^{(t)}
$$

in the calculated parameter, and transmit the calculated

$$
v_k^{(t)}
$$

to the second device. Alternatively, the second device 120 may also directly send the parameter of the trained subnetwork model to the second device 120 without considering the change in the parameter.

Correspondingly, the second device 120 receives the parameter of the trained subnetwork model 111 from *K'* clients, and updates the hypemetwork 121 based on the received parameter. As described above, the parameter received by the second device 120 may be a change in a parameter or an update amount, or may be an updated parameter of the subnetwork model 121.

FIG. 4 is a flowchart of a process 400 for generating a neural network model according to an embodiment of the present disclosure. The process 400 may be implemented by the second device 120 shown in FIG. 2, and more specifically, is performed by the control unit 123.

Block 410: Receive an indication about a structure of a subnetwork model 111 from a plurality of first devices 110, where the subnetwork model 111 is determined by adjusting a structure of a hypemetwork model 121. In some embodiments, the indication is in a form of a mask, and the mask indicates whether the subnetwork model has a corresponding parameter of the hypemetwork model. For example, the mask may be a 0-1 vector. If a component in the vector is 1, it indicates that a corresponding parameter in a hypemetwork is reserved in the subnetwork model. If a value of a component is 0, it indicates that a corresponding parameter is deleted.

Block 420: Determine a parameter of the subnetwork model based on the indication and the hypemetwork model. In some embodiments, the second device 120 performs component multiplication on an indication in a form of a mask and the parameter of the hypemetwork 121, and determines a non-zero vector in the indication as the parameter of the subnetwork model 111.

Block 430: Send the parameter of the subnetwork model to the plurality of first devices for the plurality of first devices to separately train the subnetwork model. In this way, after receiving the parameter of the subnetwork model 111, the first devices 110 train local personalized subnetwork models 111 by using local training data 112 through a gradient descent method. As described above, after training, the first devices 110 send parameters of the trained subnetwork models 111 to the second device 120.

Correspondingly: Block 440: Receive parameters of trained subnetwork models from the plurality of first devices. In some embodiments, the parameter of the trained subnetwork model received by the second device 120 includes a change in the parameter, and the change in the parameter may be a difference between the parameter before the subnetwork model is trained and the parameter after the subnetwork model is trained.

Block 450: Update the hypemetwork model by using the received parameters. In some embodiments, the hypemetwork model 121 is updated based on an update weight of the parameter of the subnetwork model 111. The update weight depends on a quantity of subnetwork models having the corresponding parameter in the subnetwork models of these first devices 110. For example, the update weight $Z_t$ may be set according to the following Equation (2):

$$Z_t = \text{Recip}\left(\sum_{k=1}^{K'} z_{t_k}\right) \qquad (2)$$

Recip(x) is the reciprocal of each component in the vector x. If a value of the component is set to 0, the reciprocal is set to 0.

Next, the second device 120 updates a hypemetwork parameter based on the update weight and the received parameter of the subnetwork model 111. The hypemetwork parameter is updated according to the following Equation (3):

$$\hat{w}^{(t+1)} = \hat{w}^{(t)} + \sum_{k=1}^{K'} Z_t \circ v_{t_k}^{(t)} \qquad (3)$$

$\hat{w}^{(t+1)}$ is a hypemetwork parameter after this round of iteration. $\hat{w}^{(t)}$ is a hypemetwork parameter at the beginning of a local iteration. $Z_t$ is an update weight.

$$v_{t_k}^{(t)}$$

is a change in the parameter at the first device 110. $\circ$ indicates multiplication of vector components.

The federated learning process may be repeatedly executed T' times as required, to complete a federated training process between the second device and the plurality of first devices.

As a result of generating the neural network model, for each client $u_k$, $k = 1, \ldots, K$, the second device 120 determines a training result of the subnetwork model 111 based on an indication or a mask of the structure of the first device 110. A specific manner is as follows: The second device 120 calculates $\hat{w}^{(T)} \circ z_k$, extracts a non-zero component

$$\hat{w}_k^{(T)},$$

and transmits the non-zero component to a specific first device $u_k$. The specific first device $u_k$, receives and sets a final subnetwork parameter to

$$\hat{w}_k = \hat{w}_k^{(T)}.$$

Subnetwork personalization

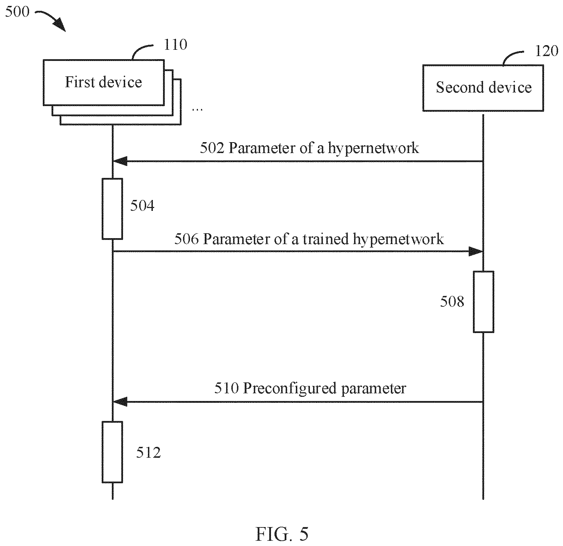

As described above, the subnetwork model 111 is determined by the first device 110 by adjusting the structure of the hypemetwork model 123, and the determined subnetwork model 111 can meet resource constraints and data distribution of the first devices 110. An embodiment of the present disclosure further provides a method for generating such a personalized subnetwork. The method is described below with reference to FIG. 5 to FIG. 8.

FIG. 5 is a schematic diagram of communication 500 for determining a structure of a subnetwork model according to an embodiment of the present disclosure. According to embodiments of the present disclosure, a personalized subnetwork model suitable for the first device 110 is determined in a federated learning manner.

First, the second device 120 transmits the parameter of the hypemetwork 121 to the plurality of first devices 110. In some embodiments, the plurality of first devices 110 may be some of all the first devices 110, preferably first devices with high performance. In this case, the first devices 110 have only a shared hypemetwork, and the first devices 110 use the received parameter to train (504) the hypemetwork.

The first devices 110 then transmit (506) the parameters of the trained hypemetwork to the second device 120. The second device 120 may gather (508) these parameters to update the hypemetwork 121. The updated parameters of the hypemetwork may be transmitted (510) to the first device 110 as preconfigured parameters. Then, the first device 120 may use the preconfigured parameters to initialize the local hypemetwork, and then adjust (for example, prune) the structure of the hypemetwork to determine a subnetwork model 111 that meets its own resource constraints and data distribution.

In some embodiments, the hypemetwork 123 of the second device 120 may be updated iteratively, for example, the second device 120 may repeat actions 502 to 508 after updating the hypemetwork 123. In addition, different first devices 110 may be selected for each iteration.

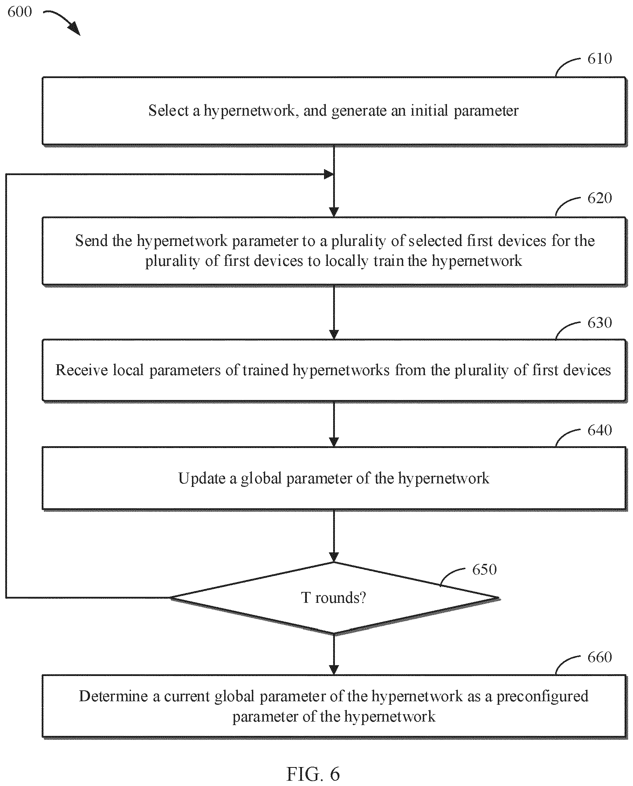

A process in which the first device 110 and the second device 120 perform federated learning to determine the personalized subnetwork 111 is described below in detail with reference to FIG. 6 to FIG. 8.

FIG. 6 is a flowchart of a process 400 for initializing a hypemetwork according to some embodiments of the present disclosure. The process 400 may be implemented by the second device 120, and more specifically, is performed by the control unit 123. In this process, a preconfigured parameter of the hypemetwork 121 may be determined, so that the first device 110 subsequently generates the personalized subnetwork model 111.

Block 410: Select a hypemetwork, and generate an initial parameter. According to embodiments of the present disclosure, the second device 21 may select a neural network model, for example, MobileNetV2, from a neural network model library as the hypemetwork 121. The neural network model may include an input layer, a plurality of hidden layers, and an output layer. Each layer includes a plurality of nodes, and nodes between layers are connected by weighted edges. A weight may be referred to as a model parameter w, and may be learned through training. Depending on a quantity of layers or model depth in the network model, a quantity of nodes at each layer, and a quantity of edges, the neural network model has a corresponding resource budget, including a model size, floating-point operations, a quantity of parameters, inference speeds, and the like. In some embodiments, the second device 120 may randomly generate an initial parameter $w^{(0)}$ of the hypemetwork 121.

As shown in the figure, Blocks 620 to 650 may be iteratively performed a plurality of times (for example, T rounds, and T is a positive integer) to determine the preconfigured parameter of the hypemetwork 121 by updating the parameter of the hypemetwork 121 through iteration ($t = 0, 1, \ldots T - 1$). Specifically: Block 620: Send the hypemetwork parameter to a plurality of selected first devices 110 for a plurality of second devices 120 to locally train the hypemetwork. According to embodiments of the present disclosure, the second device 120 may select some of the first devices from K online first devices 110, for example, may randomly select or preferably select $K'$ clients $u_{L_1}, \ldots, u_{l_{K'}}$ with high performance from the $K$ first devices 110, and the second device 120 sends a current hypemetwork parameter $w^{(t)}$ to the selected first devices. Then, each selected first device $u_k$ obtains a local parameter

$$w_{t_k}^{(t+1)}$$

of the hypemetwork by using the local training data 112. It should be noted that at this point, the first device 110 has not yet produced a personalized subnetwork 111, and the first device 110 uses the local training data 112 to train the hypemetwork determined at Block 610.

In some embodiments, each selected first device $u_{t_k}$ uses the local training data 112, and obtains a new hypemetwork parameter

$$w_{t_k}^{\prime (t+1)}$$

through S-step gradient descent, as shown in Equation (4).

$$
\begin{aligned}
w_{t_k,0}^{(t)} &= w^{(t)} \\
w_{t_k,s+1}^{(t)} &= w_{t_k,s}^{(t)} - \lambda \nabla L\left(w_{t_k,s}^{(t)}; D_{t_k,s}\right), s = 0,1,\ldots,S-1 \\
w_{t_k}^{(t+1)} &= w_{t_k,S}^{(t)}
\end{aligned}
\qquad (4)
$$

$\lambda$ is a learning rate. $L$ is a cross-entropy loss function. $D_{t_K,S}$ is a random sample of a training set $D_{L_K}$.

Then, the first device $u_k$ transmits the hypemetwork parameter

$$w_{t_k}^{(t+1)}$$

generated in the current round of iteration to the second device 120.

Correspondingly: Block 630: Receive local parameters

$$w_{t_k}^{(t+1)}$$

of trained hypernetworks from the plurality of first devices 110.

Next: Block 640: Update a global parameter of the hypemetwork. According to embodiments of the present disclosure, the second device 120 updates a global parameter of the hypemetwork 121 based on the received local parameter of the client. For example, the second device 120 updates the global parameter according to the following Equation (5):

$$w^{(t+1)} = \mathrm{Update}\left(w_{t_1}^{(t+1)}, \dots, w_{t_{K'}}^{(t+1)}\right) \tag{5}$$

$w^{(t+1)}$ represents a global parameter

$$w_{t_1}^{(t+1)}, \dots, w_{t_{K'}}^{(t+1)}$$

of the hypemetwork after t+1 iterations, and represents a local hypemetwork parameter generated by the first device 110 participating in a current iteration. The function Update() may be a preset update algorithm, and in some embodiments, the global parameter is calculated based on a weighted average of amounts of training data, as shown in the following Equation (6).

$$w^{(t+1)} = \sum_{k=1}^{K'} \frac{n_{t_k}}{n_t} w_{t_k}^{(t+1)} \tag{6}$$

$n_{t_k}$ indicates a size of a training dataset of the client $u_k$,

$$n_t = \sum_{k=1}^{K'} n_{t_k} .$$

Alternatively, an arithmetic average value of the parameters may be calculated as the global parameter of the hypemetwork.

Block 650: Determine whether T rounds are reached. If the T rounds are not reached, return to Block 620 to perform a next round of iteration. If the T rounds are reached: Block 660: Determine a current global parameter of the hypemetwork 121 as the preconfigured parameter of the hypemetwork 121, as shown in Equation (7).

$$\widehat{w} = w^{(T)} \tag{7}$$

$\widehat{w}$ is the preconfigured parameter of the hypemetwork 121, which may be used by the first device 110 to generate the personalized subnetwork 111.

In some embodiments, when iteratively updating the global parameter of the hypemetwork 121, the second device 120 may select, based on performance levels of the first devices 110, K' first devices 110 to participate in iterations, to accelerate initialization of the hypemetwork 121.

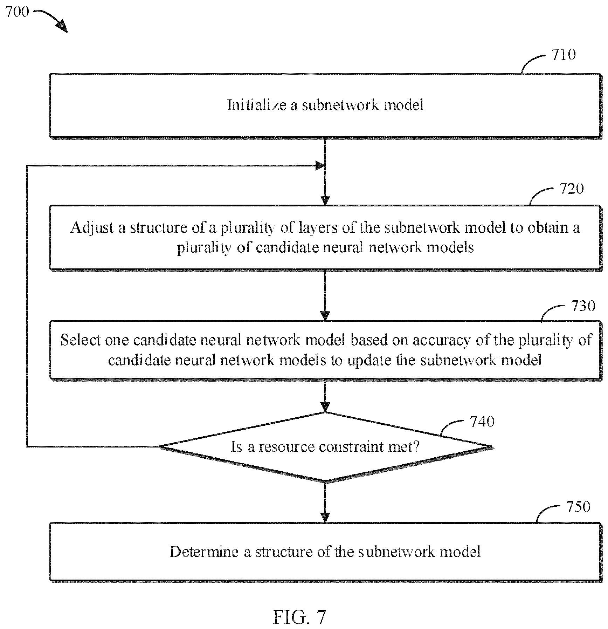

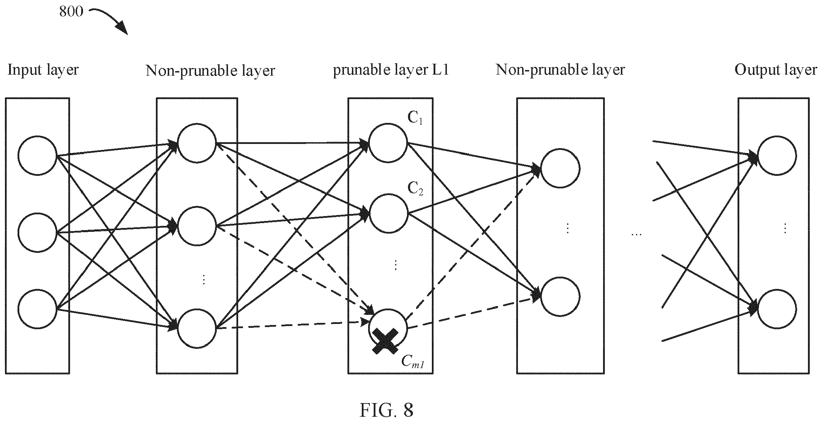

After the global initialization of the hypemetwork is completed, the second device 120 maintains the hypemetwork 121 with the parameter $\widehat{w}$. A method for personalizing a neural network model on a device is provided, which can simplify a structure of a hypemetwork 121 through pruning to generate a personalized subnetwork 111, and the generated personalized subnetwork meets data distribution and resource constraints of a client. The following provides detailed description with reference to FIG. 7 and FIG. 8.

FIG. 7 is a flowchart of a process 700 for determining a structure of a subnetwork model according to an embodiment of the present disclosure. The process 700 may be implemented in each device in K first devices 110. In the process 700, while high accuracy of the resulting subnetwork 111 is ensured, the hypemetwork is simplified by iteratively deleting nodes and parameters of the hypemetwork 121.

According to embodiments of the present disclosure, the hypemetwork 121 is pruned based on accuracy of a network model. For example, a parameter that has little impact on accuracy may be selected according to a rule. In addition, a resource constraint is also used as a hard constraint condition, and each pruning operation needs to delete at least one parameter to simplify the hypernetwork. As described above, the hypemetwork 121 may be initialized by the plurality of first devices 110 and the second device 120 through the process described above with reference to FIG. 6, and therefore high accuracy can be reached, to facilitate pruning to generate a personalized subnetwork model 111.

Block 710: Initialize a subnetwork model. According to embodiments of the present disclosure, the first device 110 $u_k$ receives a preconfigured parameter $\hat{w}$ of the hypemetwork 121, and initializes a local subnetwork model 111 to a hypernetwork with the preconfigured parameter, to be specific, $\hat{w}_k = \hat{w}$, where $\hat{w}_k$ represents a subnetwork at a client $k$. That is, at the beginning, the subnetwork model 111 of the first device has a same structure and parameter as the hypemetwork of the second device 120, and the pruning begins from this. Embodiments of the present disclosure provide a layer-by-layer pruning method, which simplifies the structure of the hypemetwork to meet resource constraints, and ensures that an obtained subnetwork has high accuracy.

A pruning process of the hypemetwork is described with reference to MobileNetV2. However, it should be understood that the pruning method provided in embodiments of the present disclosure is applicable to another type of neural network model.

FIG. 8 is a schematic diagram of pruning a hypemetwork according to an embodiment of the present disclosure. MobileNetV2 is used as a hypemetwork, and a channel (neuron) pruning operation is performed, that is, pruning is performed by channel. In a network 800, some parts such as a depthwise layer, an input layer, and an output layer cannot be pruned, while 34 layers can be pruned. It is assumed that prunable layers are L_1, ..., and L_34, and a prunable layer L_i includes m_i channels C_1, ..., and C_(m_i). For example, the local data of the first device 110 may be in a 32x32x3 image format, to be specific, the input layer has three channels, corresponding to RGB values of the image. As shown in the figure, a solid line arrow indicates a computation connection between adjacent layers. A mark X indicates a pruned channel (node). A dashed line arrow indicates a corresponding deleted connection. A computation process of a channel that is not pruned remains unchanged.

Block 720: Adjust a structure of a plurality of layers of the subnetwork model to obtain a plurality of candidate neural network models. Specifically, for the plurality of prunable layers, parameters related to some nodes at each prunable layer of the subnetwork model 111 are deleted, to obtain the plurality of candidate network models. In some embodiments, for each layer, some nodes may be determined based on a predetermined quantity percentage (for example, 0.1, 0.2, and 0.25), and parameters related to these nodes may be deleted. Then, the local data of the first device may be used to determine accuracy of the obtained pruned candidate neural network model.

For example, the first device $u_k$ prunes $\hat{w}_k$, and for an $i^{th}$ prunable layer of MobileNetV2, $i = 1, ..., 34$, the following operations are performed:

1. Delete a channel whose label is greater than $\lceil 0.9 m_i \rceil$, that is, reserve channels $C_1, ..., C_{\lceil 0.9 m_i \rceil}$.
2. Set that a corresponding deleted parameter to $v_i$.
3. Calculate accuracy of a network $\hat{w}_k \setminus v_i$ in a training set $D_k$, and record the accuracy as $A_i$. //Note: After the accuracy is calculated, $\hat{w}_k$ is restored.

Next: Block 730: Select one candidate network model based on accuracy of the plurality of candidate network models to update the subnetwork model. In some embodiments, a prunable layer $i^* = \text{argmax}_i A_i$ with the highest accuracy after pruning may be determined. Therefore, the parameter $v_{i'}$ may be deleted from the subnetwork model $\hat{w}_k$, and $\hat{w}_k = \hat{w}_k \setminus v_{i'}$ may be updated.

Block 740: Determine whether a current subnetwork model meets resource constraints. In some embodiments, a calculation amount, for example, floating-point operations (FLOPs), or a quantity of parameters of a model may be used as a resource constraint. For example, the first devices 110 may be classified as follows: (i) High-budget client: A FLOPs upper limit is 88 M, and a parameter quantity upper limit is 2.2 M. (ii) Medium-budget client: A FLOPs upper limit is 59 M, and a parameter quantity upper limit is 1.3 M. (iii) Low-budget client: A FLOPs upper limit is 28 M, and a parameter quantity upper limit is 0.7 M. In some embodiments, two federated learning settings may be considered: (1) High-performance configuration: A percentage of high-budget clients to medium-budget clients to low-budget clients is 5:3:2. (2) Low-performance configuration: A percentage of high-budget clients to medium-budget clients to low-budget clients is 2:3:5. This takes into consideration both the efficiency and accuracy of subsequent federated training.

If the current subnetwork model does not meet the resource constraint, for example, a calculation amount of the subnetwork model is greater than or equal to a threshold, or a quantity of parameters of the subnetwork model is greater than or equal to another threshold, or both of the foregoing conditions are met, the foregoing Blocks 720 and 730 are repeated to perform further pruning. In some embodiments, the above threshold regarding the calculation amount and the threshold regarding the quantiy of parameters depend on the performance of the first device 110. If the performance of the first device 110 is higher, the threshold may be set to a higher value, so that less pruning is performed on the subnetwork model 111. This means that higher accuracy can be achieved after training.

If the current subnetwork model 111 meets the resource constraint, that is, the calculation amount of the subnetwork model 111 is less than a first threshold, or the quantity of parameters of the subnetwork model is less than a second threshold, or both of the foregoing conditions are met: Block 750: Determine a structure of the current subnetwork model as a personalized subnetwork used by the first device 110 for federated training.

It should be noted that in the foregoing process, the structure of the subnetwork model 111 is adjusted iteratively, but a parameter value of the subnetwork model 111 remains unchanged, that is, a preconfigured parameter $\hat{w}$ (if not deleted) received from the second device 120 is maintained.

A process of determining the personalized subnetwork model 111 is described above. The structure of the determined subnetwork model may be indicated by, for example, a mask, for federated training.

Test result

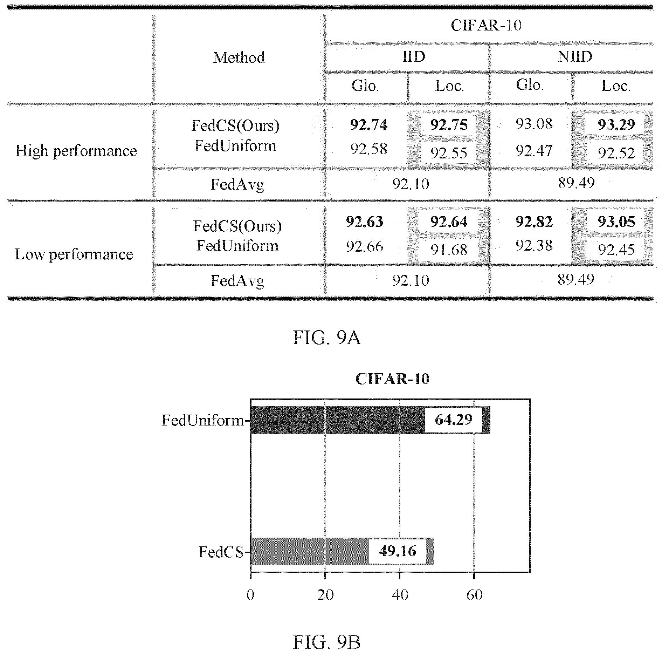

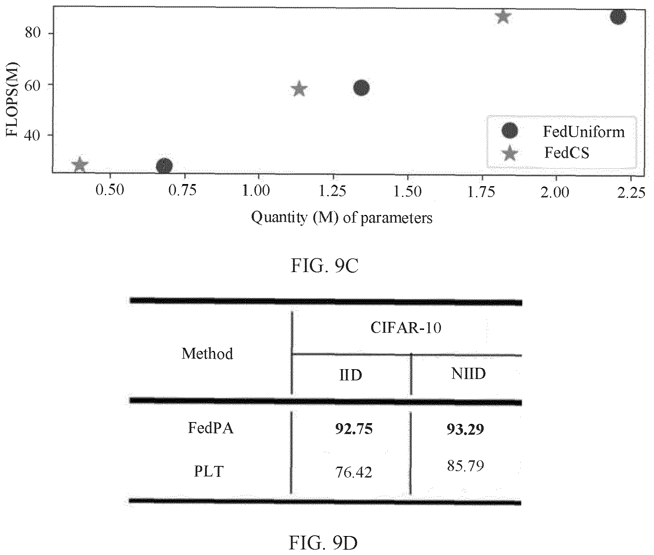

FIG. 9A, FIG. 9B, FIG. 9C, and FIG. 9D show test results according to some embodiments of the present disclosure. The test results show that the solution (FedCS) according to embodiments of the present disclosure achieves excellent performance on classification tasks, and a personalized network architecture that has undergone federated learning and training has advantages.

As shown in FIG. 9A, for a high-performance client, compared with another method (FedUniform), the solution FebCS of the present disclosure has higher accuracy in both data IID and data NIID. For clients with low performance, the advantages are more obvious.

As shown in FIG. 9B, a network architecture search framework (FedCS) of the present disclosure requires a significantly reduced amount of server-client traffic, which indicates a faster convergence speed and reduced communication costs.

In addition, the model obtained by searching has a smaller parameter quantity when the floating-point operations (FLOPs) constraint is equivalent, and therefore, storage space of a client is saved, as shown in FIG. 9C below.

In addition, as shown in FIG. 9D, compared with a client independent training policy, the subnetwork federated training algorithm in the present disclosure greatly improves accuracy. It indicates that although client subnetworks have different architectures, subnetwork performance can be effectively improved by using a mask policy to perform federated training by using a hypemetwork.

Example apparatus and device

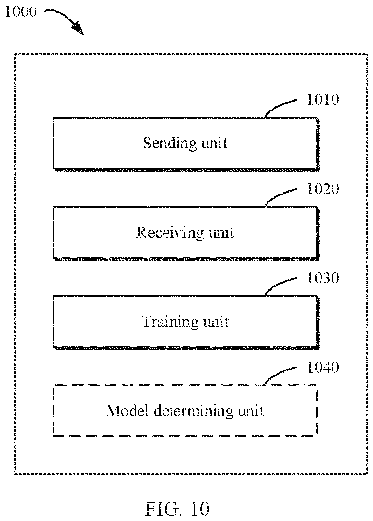

FIG. 10 is a schematic block diagram of an apparatus 1000 for generating a neural network model according to some embodiments of the present disclosure. The apparatus 1000 may be implemented in the first device 110 shown in FIG. 1.

The apparatus 1000 includes a sending unit 1010. The sending unit 1010 is configured to send an indication about a structure of a subnetwork model to a second device, where the subnetwork model is determined by adjusting a structure of a hypemetwork model. The apparatus 1000 further includes a receiving unit 1020. The receiving unit 1020 is configured to receive a parameter of the subnetwork model from the second device, where the parameter of the subnetwork model is determined by the second device based on the indication and the hypemetwork model. The apparatus 1000 further includes a training unit 1030. The training unit 1030 is configured to train the subnetwork model based on the received parameter of the subnetwork model. The sending unit 1010 is further configured to send a parameter of the trained subnetwork model to the second device for the second device to update the hypemetwork model.

In some embodiments, the receiving unit 1020 may be further configured to obtain a preconfigured parameter of the hypernetwork model. In some embodiments, the apparatus 1000 further includes a model determining unit 1040. The model determining unit 1040 is configured to determine the structure of the subnetwork model based on the preconfigured parameter and by adjusting the structure of the hypemetwork model.

In some embodiments, the training unit 1030 is configured to locally train the hypemetwork model to determine a local parameter of the hypemetwork model. The sending unit 1010 is further configured to send the local parameter to the second device. The receiving unit 1020 is further configured to receive the preconfigured parameter from the second device, where the preconfigured parameter is determined by the second device based on at least the local parameter received from a first device.

In some embodiments, the model determining unit 1040 is further configured to initialize the subnetwork model to a hypemetwork model with the preconfigured parameter. The model determining unit 1040 is further configured to iteratively update the subnetwork model by performing the following operations at least once: adjusting a structure of a plurality of layers of the subnetwork model to obtain a plurality of candidate network models; selecting one candidate network model based on accuracy of the plurality of candidate network models to update the subnetwork model; and if the subnetwork model meets a constraint of the first device, stopping the iterative update.

In some embodiments, the model determining unit 1040 is further configured to delete parameters related to some nodes of one layer in the plurality of layers to obtain one of the plurality of candidate network models. In some embodiments, the model determining unit 1040 is configured to determine the some nodes based on a predetermined quantity percentage. In the foregoing manner:

In some embodiments, a calculation amount of the subnetwork model is less than a first threshold, or a quantity of parameters of the subnetwork model is less than a second threshold.

In some embodiments, the first threshold and the second threshold are both associated with performance of the first device.

In some embodiments, the indication is in a form of a mask, and the mask indicates whether the subnetwork model has a corresponding parameter of the hypemetwork model.

In some embodiments, the sending unit 1010 may be further configured to send a change in a parameter of the trained subnetwork model to the second device for the second device to update the hypemetwork model, where it may be determined that the change in the parameter is a difference between the parameter of the trained subnetwork model and the parameter received from the second device.

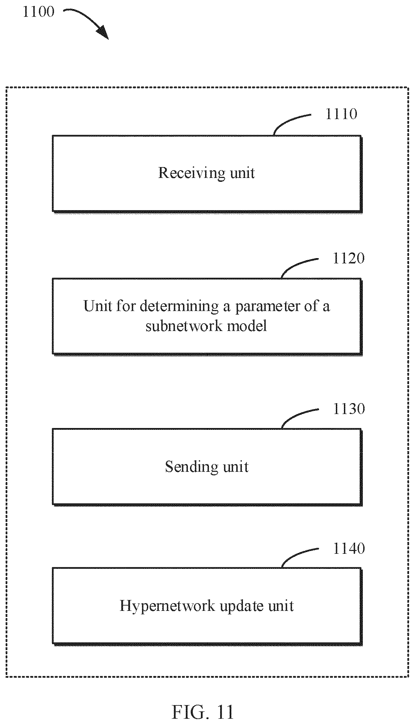

FIG. 11 is a schematic block diagram of an apparatus 1100 for generating a neural network model according to some embodiments of the present disclosure. The apparatus 1100 may be implemented in the second device 120 shown in FIG. 1.

The apparatus 1100 includes a receiving unit 1110. The receiving unit 1110 is configured to receive an indication about a structure of a subnetwork model from a plurality of first devices, where the subnetwork model is determined by adjusting a structure of a hypemetwork model. The apparatus 1100 further includes a unit 1120 for determining a parameter of a subnetwork model. The unit 1120 for determining a parameter of a subnetwork model is configured to determine a parameter of the subnetwork model based on the indication and the hypemetwork model. The apparatus 1100 further includes a sending unit 1130. The sending unit 1130 is configured to send the parameter of the subnetwork model to the plurality of first devices for the plurality of first devices to separately train the subnetwork model. The apparatus 1100 further includes a hypemetwork update unit 1140. The hypemetwork update unit 1140 is configured to update the hypemetwork model by using the parameters that are of the trained subnetwork models and that are received from the plurality of first devices by using the receiving unit 1110.

In some embodiments, the indication is in a form of a mask, and the mask indicates whether the subnetwork model has a corresponding parameter of the hypemetwork model.

In some embodiments, the receiving unit 1110 may be further configured to receive, from the plurality of first devices, a change in the parameter of the trained subnetwork model. In the foregoing manner:

In some embodiments, the hypemetwork update unit 1140 may be further configured to update the hypemetwork model by using the received change in the parameter.

In some embodiments, the hypemetwork update unit 1140 may be further configured to update the hypemetwork model based on an update weight of the parameter of the subnetwork model, where the update weight depends on a quantity of subnetwork models having the parameter.

In some embodiments, the hypemetwork update unit 1140 may be further configured to determine a preconfigured parameter of the hypemetwork model for the plurality of first devices to determine respective subnetwork models from the hypemetwork model.

In some embodiments, the hypemetwork update unit 1140 may be further configured to determine the preconfigured parameter based on a local parameter determined by locally training the hypemetwork model by the plurality of first devices. In the foregoing manner:

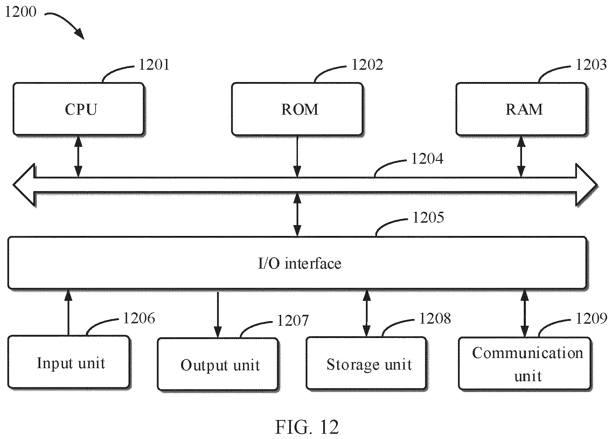

FIG. 12 is a block diagram of a computing device 1200 capable of implementing a plurality of embodiments of the present disclosure. The device 1200 may be configured to implement the first device 110, the second device 120, the apparatus 1000, and the apparatus 1100. As shown in the figure, the device 1200 includes a computing unit 1201 that may perform various appropriate actions and processing according to computer program instructions stored in a random access memory (RAM) and/or a read-only memory (ROM) 1202 or computer program instructions loaded from a storage unit 1207 into the RAM and/or ROM 1202. The RAM and/or ROM 1202 may further store various programs and data required for an operation of the device 1200. The computing unit 1201 and the RAM and/or ROM 1202 are connected to each other by a bus 1203. An input/output (I/O) interface 1204 is also connected to the bus 1203.

A plurality of components in the device 1200 are connected to the I/O interface 1204, and include: an input unit 1205, for example, a keyboard and a mouse; an output unit 1206, for example, various types of monitors and speakers; the storage unit 1107, for example, a magnetic disk or an optical disc; and a communication unit 1208, for example, a network card, a modem, or a wireless communication transceiver. The communication unit 1208 allows the device 1200 to exchange information/data with other devices via a computer network such as the Internet and/or various telecommunications networks.

The computing unit 1101 may be various general-purpose and/or dedicated processing components that have processing and computing capabilities. Some examples of the computing unit 1201 include, but are not limited to, a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, and the like. The computing unit 1201 performs any of the methods and processing described above. For example, in some embodiments, the foregoing process may be implemented as a computer software program, and the computer software program is tangibly included in a machine-readable medium, for example, the storage unit 1207. In some embodiments, a part or all of the computer program may be loaded and/or installed on the device 1200 by using the RAM and/or a ROM and/or the communication unit 1208. When a computer program is loaded into RAM and/or ROM and executed by the computing unit 1201, one or more steps in any of the processes described above may be performed. Alternatively, in another embodiment, the computing unit 1201 may be configured to perform any method and processing described above in any other appropriate manner (for example, through firmware).

The program code for implementing the methods of the present disclosure may be written using any combination of one or more programming languages. The program code may be provided to a processor or controller of a general purpose computer, a special purpose computer, or another programmable data processing apparatus, such that the program code, when executed by the processor or controller, causes the functions/operations specified in the flowchart and/or block diagram to be implemented. The program code may be fully executed on a machine, partially executed on a machine, partially executed on a machine as a stand-alone software package and partially executed on a remote machine or fully executed on a remote machine or server.

In the context of the present disclosure, a machine-readable medium may be a tangible medium that may contain or store a program for use by or in conjunction with an instruction execution system, apparatus or device. The machine-readable medium may be a machine-readable signal medium or a machine-readable storage medium. The machine-readable medium may include, but is not limited to, an electronic system, apparatus, or device, a magnetic system, apparatus, or device, an optical system, apparatus, or device, an electromagnetic system, apparatus, or device, an infrared system, apparatus, or device, or semiconductor system, apparatus, or device, or any suitable combination of the foregoing. More specific examples of the machine-readable storage medium include one or more wire-based electrical connections, portable computer disks, hard disks, random access memories (RAMs), read-only memories (ROMs), erasable programmable read-only memories (EPROMs or flash memories), optical fibers, compact disc read-only memories (CD-ROMs), optical storage devices, magnetic storage devices, or any suitable combination of the foregoing.

Furthermore, although a specific order is used to depict the operations, this should not be interpreted as requiring that these operations be performed in the specific order shown or in sequential order of execution or requiring that all shown operations be performed to obtain an expected result. Multitasking and parallel processing may be advantageous in particular environments. In addition, while several specific implementation details are included in the above discussion, these should not be construed as limiting the scope of the present disclosure. Some features described in the context of separate implementations may also be implemented in combination in a single implementation. Conversely, various features described in the context of a single embodiment may also be implemented in multiple implementations individually or in any suitable sub-combination.

Although the present subject matter has been described using language specific to structural features and/or method logical actions, it should be understood that the subject matter defined in the appended claims is not necessarily limited to the particular features or actions described above. Rather, the particular features and actions described above are merely examples of forms of implementing the claims.

**Claims**

1. A method for generating a neural network model, comprising:

    sending, by a first device, an indication about a structure of a subnetwork model to a second device, wherein the subnetwork model is determined by adjusting a structure of a hypemetwork model;
    receiving, by the first device, a parameter of the subnetwork model from the second device, wherein the parameter of the subnetwork model is determined by the second device based on the indication and the hypemetwork model;
    training, by the first device, the subnetwork model based on the received parameter of the subnetwork model; and
    sending, by the first device, a parameter of the trained subnetwork model to the second device for the second device to update the hypemetwork model.

2. The method according to claim 1, further comprising:

   obtaining, by the first device, a preconfigured parameter of the hypemetwork model; and
   determining, by the first device, the structure of the subnetwork model based on the preconfigured parameter and by adjusting the structure of the hypemetwork model.

3. The method according to claim 2, wherein the obtaining a preconfigured parameter of the hypemetwork model comprises:

   locally training, by the first device, the hypemetwork model to determine a local parameter of the hypemetwork model;
   sending, by the first device, the local parameter to the second device; and
   receiving, by the first device, the preconfigured parameter from the second device, wherein the preconfigured parameter is determined by the second device based on at least the local parameter received from the first device.

4. The method according to claim 2, wherein the determining the structure of the subnetwork model comprises:

   initializing the subnetwork model to a hypemetwork model with the preconfigured parameter; and
   iteratively updating the subnetwork model by performing the following operations at least once:

   adjusting a structure of a plurality of layers of the subnetwork model to obtain a plurality of candidate network models;
   selecting one candidate network model based on accuracy of the plurality of candidate network models to update the subnetwork model; and
   if the subnetwork model meets a constraint of the first device, determining the structure of the subnetwork model.

5. The method according to claim 4, wherein the adjusting a structure of a plurality of layers comprises:
   deleting parameters related to some nodes of one layer in the plurality of layers to obtain one of the plurality of candidate network models.

6. The method according to claim 5, further comprising:
   determining the some nodes based on a predetermined quantity percentage.

7. The method according to claim 1, wherein the constraint comprises: a calculation amount of the subnetwork model is less than a first threshold, or a quantity of parameters of the subnetwork model is less than a second threshold.

8. The method according to claim 7, wherein the first threshold and the second threshold are both associated with performance of the first device.

9. The method according to claim 1, wherein the indication is in a form of a mask, and the mask indicates whether the subnetwork model has a corresponding parameter of the hypemetwork model.

10. The method according to claim 1, wherein the sending a parameter of the trained subnetwork model comprises:

    determining a change in the parameter by calculating a difference between the parameter of the trained subnetwork model and the parameter received from the second device; and
    sending the change in the parameter to the second device.

11. A method for generating a neural network model, comprising:

    receiving, by a second device, an indication about a structure of a subnetwork model from a plurality of first devices, wherein the subnetwork model is determined by adjusting a structure of a hypemetwork model;
    determining, by the second device, a parameter of the subnetwork model based on the indication and the hypemetwork model;
    sending, by the second device, the parameter of the subnetwork model to the plurality of first devices for the plurality of first devices to separately train the subnetwork model;
    receiving, by the second device, a parameter of the trained subnetwork model from the plurality of first devices;

and
updating, by the second device, the hypernetwork model by using the received parameter.

12. The method according to claim 11, wherein the indication is in a form of a mask, and the mask indicates whether the subnetwork model has a corresponding parameter of the hypemetwork model.

13. The method according to claim 11, wherein the receiving a parameter of the trained subnetwork model further comprises:
receiving, from the plurality of first devices, a change in the parameter of the trained subnetwork model.

14. The method according to claim 11, wherein the updating the hypemetwork model comprises:
updating the hypemetwork model based on an update weight of the parameter of the subnetwork model, wherein the update weight depends on a quantity of subnetwork models having the parameter.

15. The method according to claim 11, further comprising:
determining, by the second device, a preconfigured parameter of the hypemetwork model for the plurality of first devices to determine respective subnetwork models from the hypemetwork model.

16. The method according to claim 15, wherein the determining a preconfigured parameter comprises:
determining the preconfigured parameter based on a local parameter determined by locally training the hypemetwork model by the plurality of first devices.

17. An apparatus for generating a neural network model, comprising:

a sending unit, configured to send an indication about a structure of a subnetwork model to a second device, wherein the subnetwork model is determined by adjusting a structure of a hypemetwork model;
a receiving unit, configured to receive a parameter of the subnetwork model from the second device, wherein the parameter of the subnetwork model is determined by the second device based on the indication and the hypemetwork model; and
a training unit, configured to train the subnetwork model based on the received parameter of the subnetwork model, wherein
the sending unit is further configured to send a parameter of the trained subnetwork model to the second device for the second device to update the hypemetwork model.

18. The apparatus according to claim 17, wherein the receiving unit is further configured to obtain a preconfigured parameter of the hypemetwork model, and the apparatus further comprises:
a model determining unit, configured to determine the structure of the subnetwork model based on the preconfigured parameter and by adjusting the structure of the hypemetwork model.

19. The apparatus according to claim 18, wherein the model determining unit is further configured to:

initialize the subnetwork model to a hypemetwork model with the preconfigured parameter; and
iteratively update the subnetwork model by performing the following operations at least once:

adjusting a structure of a plurality of layers of the subnetwork model to obtain a plurality of candidate network models;
selecting one candidate network model based on accuracy of the plurality of candidate network models to update the subnetwork model; and
if the subnetwork model meets a constraint of a first device, determining the structure of the subnetwork model.

20. An apparatus for generating a neural network model, comprising:

a receiving unit, configured to receive an indication about a structure of a subnetwork model from a plurality of first devices, wherein the subnetwork model is determined by adjusting a structure of a hypemetwork model;
a unit for determining a parameter of a subnetwork model, configured to determine a parameter of the subnetwork model based on the indication and the hypemetwork model;
a sending unit, configured to send the parameter of the subnetwork model to the plurality of first devices for the plurality of first devices to separately train the subnetwork model; and
a hypemetwork update unit, wherein
the receiving unit is further configured to receive a parameter of the trained subnetwork model from the plurality of first devices; and
the hypemetwork update unit is configured to update the hypemetwork model by using the received parameter.

21. The apparatus according to claim 20, wherein the hypemetwork update unit is further configured to:
update the hypemetwork model based on an update weight of the parameter of the subnetwork model, wherein the update weight depends on a quantity of subnetwork models having the parameter.

22. The apparatus according to claim 20, wherein the hypemetwork update unit is further configured to:
determine a preconfigured parameter of the hypemetwork model for the plurality of first devices to determine respective subnetwork models from the hypemetwork model.

23. A system for generating a neural network model, comprising:

a first device, configured to perform the method according to any one of claims 1 to 10; and
a second device, configured to perform the method according to any one of claims 11 to 16.

24. An electronic device, comprising:

at least one computing unit; and
at least one memory, wherein the at least one memory is coupled to the at least one computing unit and stores instructions executed by the at least one computing unit, and when the instructions are executed by the at least one computing unit, the electronic device is enabled to perform the method according to any one of claims 1 to 10 or the method according to any one of claims 11 to 16.

25. A computer-readable storage medium, storing one or more computer instructions, wherein when the one or more computer instructions are executed by a processor, the processor is enabled to perform the method according to any one of claims 1 to 10 or the method according to any one of claims 11 to 16.

26. A computer program product, comprising machine-executable instructions, wherein when the machine-executable instructions are executed by a device, the device is enabled to perform the method according to any one of claims 1 to 10 or the method according to any one of claims 11 to 16.

FIG. 1

FIG. 2

300

310

Send an indication of a structure of a subnetwork model to a second device, where the subnetwork model is determined by adjusting a structure of a hypernetwork model

320

Receive a parameter of the subnetwork model from the second device

330

Train the subnetwork model based on the received parameter

340

Send a parameter of a trained subnetwork model to the second device

FIG. 3

400

410

Receive an indication about a structure of a subnetwork model from a plurality of first devices, where the subnetwork model is determined by adjusting a structure of a hypernetwork model

420

Determine a parameter of the subnetwork model based on the indication and the hypernetwork model

430

Send the parameter of the subnetwork model to the plurality of first devices for the plurality of first devices to separately train the subnetwork model

440

Receive parameters of trained subnetwork models from the plurality of first devices

450

Update the hypernetwork model by using the received parameters

FIG. 4

500

110
First device

...

120
Second device

502 Parameter of a hypernetwork

504

506 Parameter of a trained hypernetwork

508

510 Preconfigured parameter

512

FIG. 5

600

610

Select a hypernetwork, and generate an initial parameter

620

Send the hypernetwork parameter to a plurality of selected first devices for the plurality of first devices to locally train the hypernetwork

630

Receive local parameters of trained hypernetworks from the plurality of first devices

640

Update a global parameter of the hypernetwork

650

T rounds?

660

Determine a current global parameter of the hypernetwork as a preconfigured parameter of the hypernetwork

FIG. 6

700 ⟋

┌─────────────────────────────────────────────────────────────────────┐
│                                                            ⌐ 710      │
│                     Initialize a subnetwork model                    │
└─────────────────────────────────────────────────────────────────────┘

┌─────────────────────────────────────────────────────────────────────┐
│                                                            ⌐ 720      │
│   Adjust a structure of a plurality of layers of the subnetwork model to obtain a │
│              plurality of candidate neural network models            │
└─────────────────────────────────────────────────────────────────────┘

┌─────────────────────────────────────────────────────────────────────┐
│                                                            ⌐ 730      │
│   Select one candidate neural network model based on accuracy of the plurality of │
│        candidate neural network models to update the subnetwork model │
└─────────────────────────────────────────────────────────────────────┘

◇ Is a resource constraint met?  ⌐ 740

┌─────────────────────────────────────────────────────────────────────┐
│                                                            ⌐ 750      │
│                 Determine a structure of the subnetwork model         │
└─────────────────────────────────────────────────────────────────────┘

FIG. 7

FIG. 8

| | | CIFAR-10 | | | |
|---|---|---|---|---|---|
| | Method | IID | | NIID | |
| | | Glo. | Loc. | Glo. | Loc. |
| High performance | FedCS(Ours) | **92.74** | **92.75** | 93.08 | **93.29** |
| | FedUniform | 92.58 | 92.55 | 92.47 | 92.52 |
| | FedAvg | 92.10 | | 89.49 | |
| Low performance | FedCS(Ours) | **92.63** | **92.64** | **92.82** | **93.05** |
| | FedUniform | 92.66 | 91.68 | 92.38 | 92.45 |
| | FedAvg | 92.10 | | 89.49 | |

FIG. 9A

**CIFAR-10**

FIG. 9B

FIG. 9C

| Method | CIFAR-10 | |
|---|---|---|
| | IID | NIID |
| FedPA | **92.75** | **93.29** |
| PLT | 76.42 | 85.79 |

FIG. 9D

1000

Sending unit — 1010

Receiving unit — 1020

Training unit — 1030

Model determining unit — 1040

FIG. 10

1100

1110

Receiving unit

1120

Unit for determining a parameter of a subnetwork model

1130

Sending unit

1140

Hypernetwork update unit

FIG. 11

FIG. 12

<table>
<tr><td colspan="2">**INTERNATIONAL SEARCH REPORT**</td><td>International application No.<br><br>**PCT/CN2022/101128**</td></tr>
</table>

**A.  CLASSIFICATION OF SUBJECT MATTER**

G06N 3/02(2006.01)i

According to International Patent Classification (IPC) or to both national classification and IPC

**B.  FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNABS, CNTXT, VEN, WOTXT, EPTXT, CNKI, USTXT, IEEE: 超网络, 联邦学习, 子网络, 结构, 掩码, 训练, 搜索, supernet, federated learning, subnetworks, structure, mask, training, search

**C.  DOCUMENTS CONSIDERED TO BE RELEVANT**

| Category* | Citation of document, with indication, where appropriate, of the relevant passages | Relevant to claim No. |
|---|---|---|
| PX | CN 113570027 A (HUAWEI TECHNOLOGIES CO., LTD.) 29 October 2021 (2021-10-29) description, paragraphs 3-40 | 1-26 |
| PX | LUO, Mi et al. "Architecture Personalization in Resource-constrained Federated Learning" *1st NeurIPS Workshop on New Frontiers in Federated Learning (NFFL 2021), Virtual Meeting,* 31 December 2021 (2021-12-31), pp. 1-6 | 1-26 |
| X | CN 112818207 A (SHENZHEN QIANHAI WEBANK CO., LTD.) 18 May 2021 (2021-05-18) description, paragraphs 183-195 | 1-26 |
| X | CN 111340242 A (ALIPAY (HANGZHOU) INFORMATION TECHNOLOGY CO., LTD.) 26 June 2020 (2020-06-26) description, paragraphs 5-12 | 1-26 |
| A | US 2021097383 A1 (INTERNATIONAL BUSINESS MACHINES CORP.) 01 April 2021 (2021-04-01) entire document | 1-26 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **23 August 2022** | **06 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/101128**

| Patent document cited in search report | | | Publication date (day/month/year) | Patent family member(s) | | | Publication date (day/month/year) |
|---|---|---|---|---|---|---|---|
| CN | 113570027 | A | 29 October 2021 | None | | | |
| CN | 112818207 | A | 18 May 2021 | None | | | |
| CN | 111340242 | A | 26 June 2020 | CN | 111340242 | B | 04 August 2020 |
| US | 2021097383 | A1 | 01 April 2021 | None | | | |

Form PCT/ISA/210 (patent family annex) (January 2015)